# EUROPEAN PATENT APPLICATION

(11) **EP 2 851 834 A1**
(43) Date of publication of application: **25.03.2015**
(21) Application number: 13791690.4
(22) Date of filing: 12.04.2013
(51) Int. Cl.: G06F 21/62

(54) **SCREENING MANAGEMENT DEVICE AND SCREENING MANAGEMENT METHOD**

(30) Priority: 15.05.2012 JP 2012111292
(71) Applicant: Sony Corporation, Tokyo 108-0075 (JP)
(72) Inventor: SUGIMOTO, Yoshitaka, Tokyo 108-0075 (JP); SUKIGARA, Ryu, Tokyo 108-0075 (JP); OHGAMI, Takahisa, Tokyo 108-0075 (JP); CHOKI, Yuta, Tokyo 108-0075 (JP); OGAWA, Katsumi, Tokyo 108-0075 (JP)
(74) Representative: DeVile, Jonathan Mark
(86) International application number: PCT/JP2013/002510
(87) International publication number: WO 2013/171968

(57) **Abstract**

[Object] To unify the management of an access authority to contents in a theater not depending on a wide variety of complicated OS protocols.

[Solving Means] The owner group setting unit sets a group per area (path) where a content is placed. The affiliation group setting unit sets a group accessible by the user. The content owner filter unit filters contents accessible by the user in accordance with the settings of the owner group setting unit and the affiliation group setting unit. The content kind setting unit sets a content kind accessible by the user. The content kind storing unit stores the content kind acquired by the content kind acquisition unit. The content kind filter unit filters contents accessible by the user in accordance with the setting of the content kind setting unit based on the content kind acquired by the content kind acquisition unit.

## Description

### Technical Field

The present technology relates to a movie showing management apparatus and a movie showing management method. In particular, the present technology relates to a movie showing management apparatus and a movie showing management method that manage an access authority of showing contents in a digital cinema among others from movie theater management systems for managing operations over the whole movie theater.

### Background Art

A movie theater called a cinema complex where a plurality of screens are disposed within the same facility is increasing. In such a movie theater, there are a plurality of screens having different seats numbers. By showing the movie on the screen chosen depending on the ability to pull viewers of the movie, the movie theater can be effectively operated.

On the respective screens, a preshow (ad), a live event, a preview, the movie etc. are shown. Among these contents, preshow contents are owned by a preshow vendor, live event contents are owned by an event company, and the preview and the movie are owned by the theater. Thus, these contents are managed by the respective owners. A screen management system manages these contents per screen. In the screen management system, an authorized user can operate remotely a projector or a server to reproduce files. The screen management system is connected to a movie theater management system via a network. The movie theater management system manages a whole movie theater (see Patent Document 1, for example).
Patent Document 1: Japanese Patent Application Laid-open No. 2008-518322

### Summary of Invention

### Problem to be solved by the Invention

In a digital cinema theater, there are various kinds and affiliations of contents that are handled by a plurality of users having different roles and affiliations. In such circumstances, a content authority management is necessary per user.

In general, for the authority management, an access authorization management of an OS (Operating System) file system is often used. However, access management methodologies are different depending on OS protocols. In the digital cinema, the contents are prepared by the owner. Accordingly, a file server for saving and managing the contents uses a wide variety of OS protocols. In such circumstances, when the authorization management of the existing file system is diverted to manage the access authority of the contents, all access management methodologies of the wide variety of OS protocols should be contemplated. However, it is difficult to construct an actual system architecture contemplating all OS protocols.

In the OS protocols, only after the contents are actually accessed by a log-in user, it can be found that the contents are accessible or not by the authority of the user. It takes a long time to display all contents accessible by the user after the user is logged in.

The present disclosure is made in terms of such points, and provides a movie showing management apparatus and a movie showing management method that unify the management of the access authority about the contents within the theater not depending on the wide variety of complicated OS protocols.

### Means for solving the Problem

According to the present disclosure, a movie showing management apparatus includes:
an owner group setting unit for setting a correspondence relationship between an area where contents are saved and a group holding the contents,
an affiliation group setting unit for setting a correspondence relationship between a user and an affiliation group of the user,
a content kind setting unit for setting a relationship between the user and a content kind browsable by the user,
a content owner filter unit for filtering the contents accessible by the user depending on the area holding the contents in accordance with the setting by the owner group setting unit and the affiliation group setting unit when the user accesses to the contents, and
a content kind filter unit for filtering the contents accessible by the user depending on the kind in accordance with the setting by the content kind setting unit when the user accesses to the contents.

According to the present disclosure, a movie showing management method includes,
setting a first correspondence relationship between an area where contents are saved and a group holding the contents, a second correspondence relationship between a user and an affiliation group of the user, and a third correspondence relationship between the user and kinds of the contents accessible by the user when the user accesses to the contents such that at least one of the contents held by the affiliation group of the user based on the first and second correspondence relationship and the content kind browsable by the user based on the third correspondence relationship when the user accesses to the contents.

### Effect of the Invention

According to the present disclosure, the access authority is filtered depending on the owner of the contents and the content kind (file content), and the access can be advantageously managed not depending on the wide variety of complicated OS protocols.

### Brief Description of Drawings

[Fig. 1] A view showing a system configuration of a movie theater.
[Fig. 2] A view showing illustrative contents in the movie theater.
[Fig. 3] A view showing illustrative users operating the movie theater.
[Fig. 4] A configuration embodiment of a movie showing management system.
[Fig. 5] A view showing illustrative setting of owner groups.
[Fig. 6] A view showing illustrative setting of affiliation groups.
[Fig. 7] A view showing illustrative access restrictions by the owner.
[Fig. 8] A view showing illustrative content kinds.
[Fig. 9] A view showing illustrative data configuration of a content kind storing unit.
[Fig. 10] A view showing illustrative access restrictions by the content kind.
[Fig. 11] A flow chart showing a process flow of a content owner filter unit and a content kind filter unit.
[Fig. 12] A first generation embodiment of a content list generation unit.
[Fig. 13] A second generation embodiment of a content list generation unit.
[Fig. 14] A third generation embodiment of a content list generation unit.
[Fig. 15] A hardware configuration embodiment of a movie theater management system used in the present embodiments.

### Mode(s) for Carrying Out the Invention

Hereinafter, embodiments according to the present technology will be described in detail with reference to the drawings.

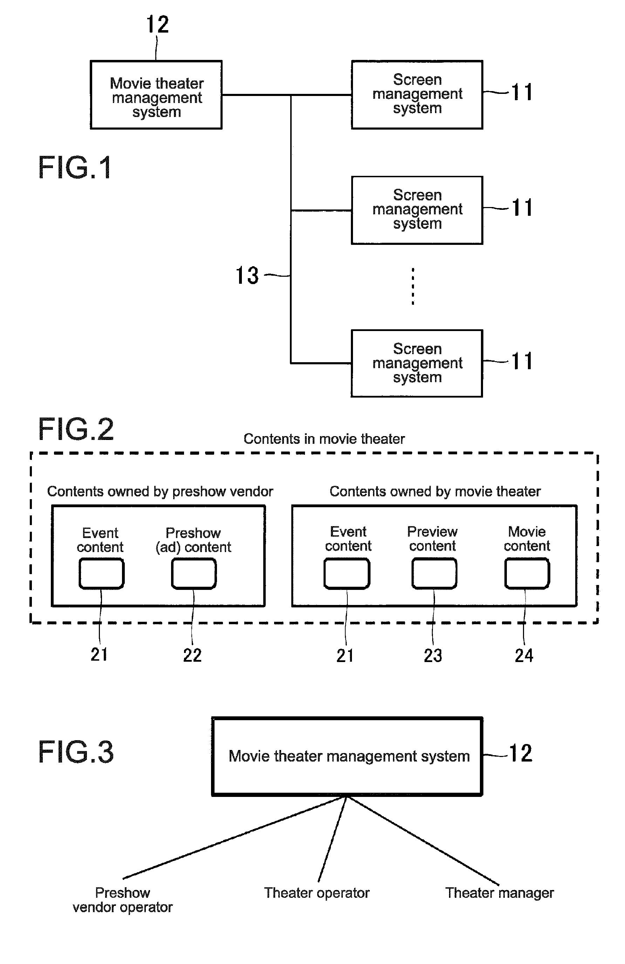

Fig. 1 is a view showing a system configuration of a movie theater. Fig. 2 is a view showing illustrative contents in the movie theater. Fig. 3 is a view showing illustrative users operating the movie theater.

A movie theater called a cinema complex has a plurality of screens. Each screen is managed by each screen management system 11. All screen systems 11 are connected to a movie theater management system 12 via a network 13. The movie theater management system 12 manages all screens.

There are a plurality of content kinds shown in the movie theater including an event content 21, a preshow (ad) content 22, a preview content 23, a movie content 24 etc. as shown in Fig. 2. As these content kinds are defined as meta data, the contents can be interpreted to determine the contents kinds. In addition, there are owners per content. For example, there are the contents owned by the theater, the contents owned by a preshow vendor.

A plurality of users such as a preshow vendor operator, a theater operator and a theater manager manage the movie theater management system 12 to operate the movie theater, as shown in Fig. 3.

In the circumstance where a plurality of users manage the movie theater management system 12, content access restrictions are necessary per user. Hereinafter, an authority management concerning a user access to the contents in the movie theater management system 12 will be described.

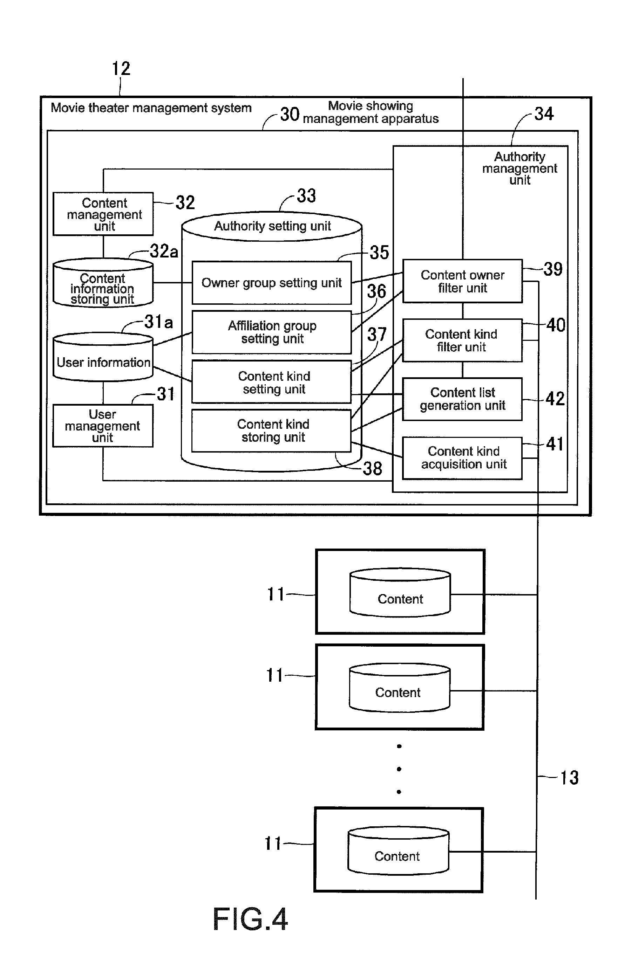

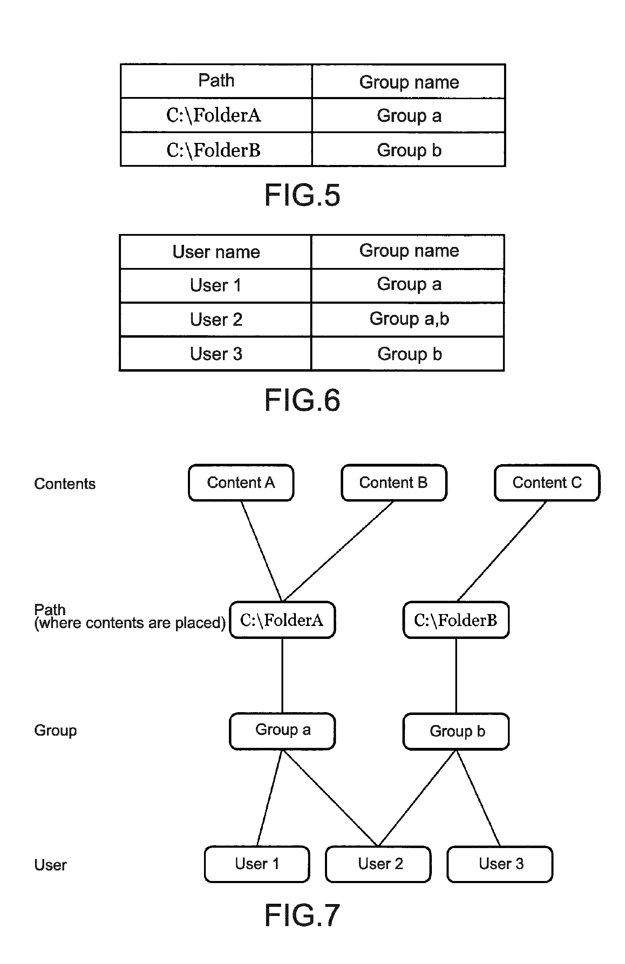

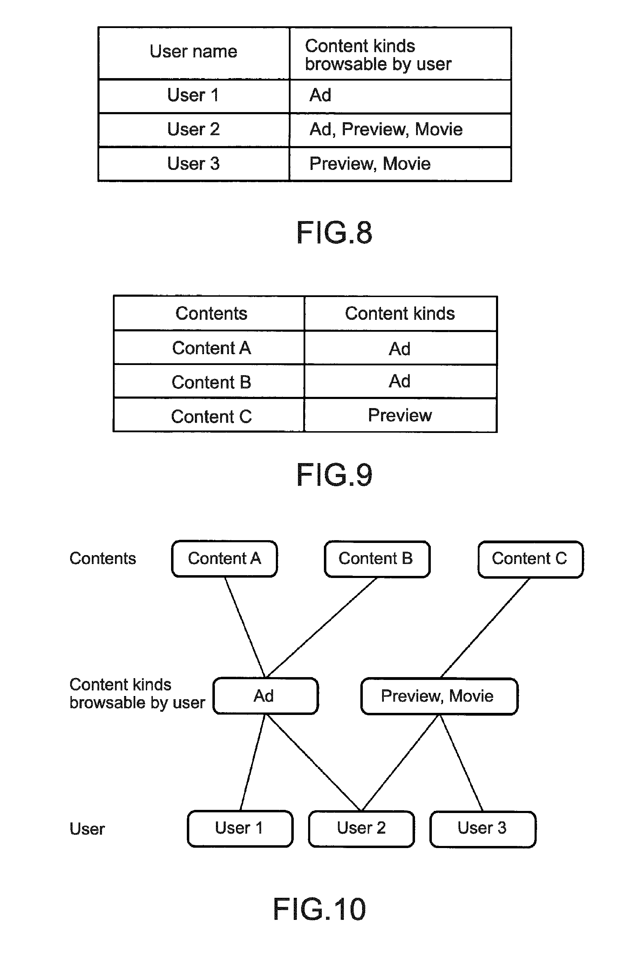

Fig. 4 show a configuration embodiment of a movie showing management system. Fig. 5 is a view showing illustrative setting of owner groups. Fig. 6 is a view showing illustrative setting of affiliation groups. Fig. 7 is a view showing illustrative access restrictions by the owner. Fig. 8 is a view showing illustrative content kinds. Fig. 9 is a view showing illustrative data configuration of a content kind storing unit. Fig. 10 is a view showing illustrative access restrictions by the content kind.

A movie showing management apparatus 30 includes a user management unit 31 for managing a user, a content management unit 32 for managing contents, an authority setting unit 33 for performing various settings, and an authority management unit 34 for determining whether or not the user is accessible to the contents depending on the various settings. The user management unit 31 is connected to a user information storing unit 31a and manages user's information, and the content management unit 32 is connected to a content information storing unit 32a and manages content information.

The authority setting unit 33 includes an owner group setting unit 35, an affiliation group setting unit 36, a content kind setting unit 37 and a content kind storing unit 38. The authority management unit 34 includes a content owner filter unit 39, a content kind filter unit 40 and a content kind acquisition unit 41 and a content list generation unit 42.

The owner group setting unit 35 of the authority setting unit 33 sets a group per area (path) where a content is placed. The affiliation group setting unit 36 sets a group accessible by the user. The content kind setting unit 37 sets a content kind accessible by the user. The content kind storing unit 38 stores the content kind acquired by the content kind acquisition unit 41.

The content owner filter unit 39 of the authority management unit 34 filters contents accessible by the user in accordance with the settings of the owner group setting unit 35 and the affiliation group setting unit 36. The content kind filter unit 40 filters contents accessible by the user in accordance with the setting by the content kind setting unit 37 based on the content kind acquired by the content kind acquisition unit 41. The content kind acquisition unit 41 reads out a content file stored on the file server of the screen management system 11, and acquires the content kind. The content list generation unit 42 generates a content list browsable by the user in accordance with the setting by the content kind setting unit 37 based on the content kind stored on the content kind storing unit 38.

The movie showing management apparatus 30 utilizes two independent management methods for a content access management. A first method is to manage a user access based on the idea of the owner for whom the contents are for, and is fulfilled by the content owner filter unit 39. A second method is to manage a user access based on the content kind, and is fulfilled by the content kind filter unit 40.

The first access management by the content owner filter unit 39 has an idea that a content owner is represented by a group. A group of the content owner is determined as follows: As shown in Fig. 5, the owner group setting unit 35 has an association table including paths where contents are placed and group names, and sets the group per an area (path) where the contents are placed. Here, once the contents are placed on the path, the set group is regarded as the owner. In this way, a content owner group is determined. Next, the affiliation group setting unit 36 has an association table including user names and group names, and sets a user affiliation group to determine a user accessible group, as shown in Fig. 6. The content owner filter unit 39 determines which contents are accessible to the user from the content owner group and the user affiliation group. In other words, the user is accessible only the contents owned by the user affiliation group, and is inaccessible to other contents.

For example, as shown in Fig. 7, there are a "Content A", a "Content B" and a "Content C". The "Content A" and the "Content B" are stored on a "Folder A", and the "Content C" is stored on a "Folder B". To the "Folder A", a "Group a" is set. To the "Folder B", a "Group b" is set. To the "Group a", a "User 1" and a "User 2" are set. To the "Group b", the "User 2" and a "User 3" are set. In this case, the "User 1" is accessible only to the "Content A" and the "Content B" under the "Folder A" to which the "Group a" is set, and is inaccessible to the "Content C". The "User 2" is accessible to all contents under the "Folder A" and the "Folder B" to which the "Group a" and the "Group b" are set. The "User 3" is accessible only to the "Content C" under the "Folder B" to which the "Group b" is set, and is inaccessible to the "Content A" and the "Content B".

In this manner, the content owner filter unit 39 fulfills the access restriction of the contents to the user by the content owner group and the user affiliation group.

Next, the content kind filter unit 40 performs the second access management. The method of managing the user access will be described depending on the content kinds. The content kind setting unit 37 has an association table including user names and content kinds browsable by the user, and sets the content kinds accessible by each user, as shown in Fig. 8. The content kinds acquired by the content kind acquisition unit 41 are stored on the content kind storing unit 38 in the form of an association table including contents and content kinds, as shown in Fig. 9.

As shown in Fig. 10, there are the "Content A", the "Content B" and the "Content C". As the content kind, "Ad" is set to the "Content A" and the "Content B", and "Preview and Movie" are set to the "Content C". To the "Ad" of the content kind, the "User 1" and the "User 2" are set. To the "Preview and Movie", the "User 2" and the "User 3" are set. In this case, the "User 1" is accessible only to the "Content A" and the "Content B" of the "Ad", and is inaccessible to the "Content C". The "User 2" can browse all content kinds, and is therefore accessible to the "Content A", the "Content B" and the "Content C". The "User 3" is accessible only to the "Content C" of the "Preview and Movie", and is inaccessible to the "Content A" and the "Content B".

In this manner, the content kind filter unit 40 determines that the user is accessible only to the specified content kinds, and is inaccessible to other content kinds.

The access management based on a first owner and a user access management in accordance with a second content kind are independent concepts. Accordingly, the contents finally browsable by the user may satisfy the both conditions, or may satisfy either one of the conditions.

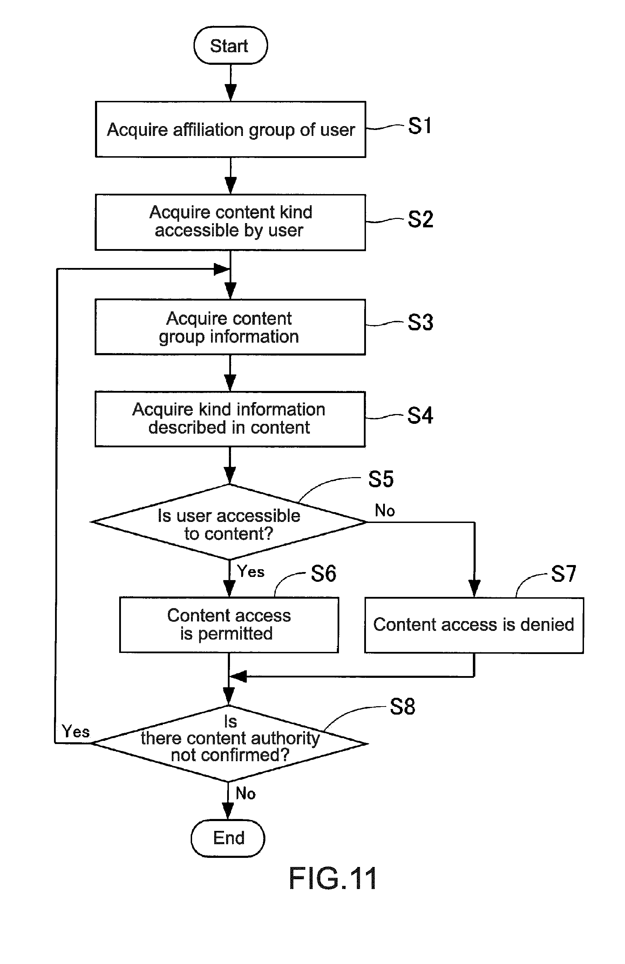

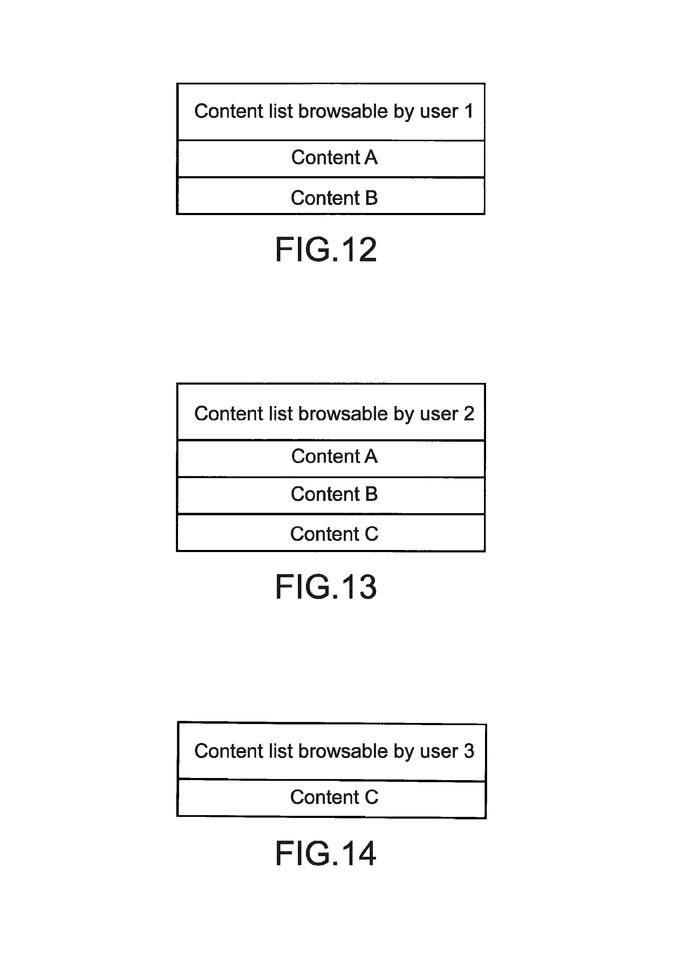

Fig. 11 is a flow chart showing a process flow of the content owner filter unit and the content kind filter unit. Fig. 12 shows a first generation embodiment of a content list generation unit. Fig. 13 shows a second generation embodiment of a content list generation unit. Fig. 14 shows a third generation embodiment of a content list generation unit.

Processing by the content owner filter unit 39 and the content kind filter unit 40 are started when the user logs in the movie theater management system 12 and accesses (displays, deletes, etc.) the contents.

Firstly, the content owner filter unit 39 acquires the user affiliation group from the affiliation group setting unit 36 (Step S1). Next, the content kind filter unit 40 acquires the content kind accessible by the user from the content kind setting unit 37 (Step S2).

Next, the content owner filter unit 39 acquires content group information from the owner group setting unit 35 (Step 3). Next, the content kind filter unit 40 acquires content kind information described in the content file from the content kind storing unit 38 (Step 4).

Next, the content owner filter unit 39 and/or the content kind filter unit 40 determine whether or not the user is accessible to the contents based on the content information acquired and to be accessed and the content kind information (Step S5). Here, when the user is accessible to the contents, the content owner filter unit 39 and/or the content kind filter unit 40 permit the access to the contents (Step S6). When the user is inaccessible to the contents, the content owner filter unit 39 and/or the content kind filter unit 40 deny the access to the contents (Step S7).

Next, the content owner filter unit 39 and/or the content kind filter unit 40 determine whether or not is there the content authority not confirmed (Step 8). When there is the content authority not yet confirmed, the process proceeds to Step S3. When all of the content authority is confirmed, the process ends.

Here, based on processing results of the content owner filter unit 39 and the content kind filter unit 40, generation of a content list by the content list generation unit 42 will be described.

For example, when the "User 1" searches the contents browsable, the content list generation unit 42 can generate the content list, as shown in Fig. 12. In the embodiment shown in Fig. 7, as the contents set to the group affiliated by the "User 1" are the "Content A" and the "Content B", the "Content A" and the "Content B" are displayed in the content list browsable by the User 1. As the content kind set to the "User 1" is "Ad" as shown in Fig. 10, the "Content A" and the "Content B" of the "Ad" are displayed in the content list browsable by the User 1.

When the "User 2" searches the contents browsable, the content list generation unit 42 can generate the content list, as shown in Fig. 13. In the embodiment shown in Fig. 7, as the contents set to the group affiliated by the "User 2" are the "Content A" to the "Content C", the "Content A" to the "Content C" are displayed in the content list browsable by the User 2. As the content kind set to the "User 2" is "Ad, Preview, Movie" as shown in Fig. 10, the "Content A" to the "Content C" of the "Ad, Preview" are displayed in the content list browsable by the User 2.

When the "User 3" searches the contents browsable, the content list generation unit 42 can generate the content list, as shown in Fig. 14. In the embodiment shown in Fig. 7, as the contents set to the group affiliated by the "User 3" are the "Content C", the "Content C" is displayed in the content list browsable by the User 3. As the content kind set to the "User 3" is "Ad, Preview, Movie" as shown in Fig. 10, the "Content C" of the "Preview" is displayed in the content list browsable by the User 3.

In this manner, the movie showing management apparatus 30 determines whether or not the user is accessible or inaccessible based on the content group information and the content kind information so that the content authority management can be unified not depending on the OS protocols.

In addition, as the user can manage and browse only the contents belonging to the affiliation group and the content kinds browsable by itself, there is no chance to browse or change unauthorized contents carelessly.

Furthermore, the content kind storing unit 38 always holds all content kinds. As the content list generation unit 42 generates a browsable content list by filtering the contents following the authority per log-in user, the display for the user can be faster after logged in.

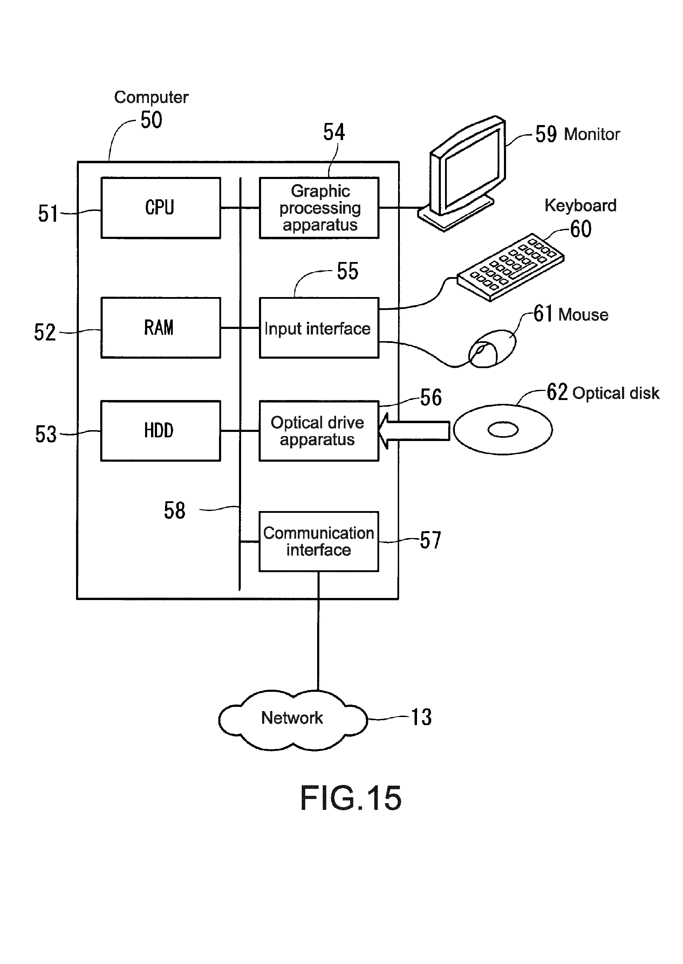

Fig. 15 is a hardware configuration embodiment of a movie theater management system used in the present embodiments.

A computer 50 is totally controlled by a CPU (Central Processing Unit) 51. To the CPU 51, a RAM (Random Access Memory) 52, a hard disk drive (HDD) 53, a graphical processing unit 54, an input interface 55, an optical drive apparatus 56 and a communication interface 57 are connected via a bus 58.

On the RAM 52, at least a part of an OS program and an application program executed by the CPU 51 is temporarily stored. Also, on the RAM 52, a variety of data necessary for the processing by the CPU 51 is stored. To the hard disk drive 53, the OS, the application program, contents information, user information, configuration information etc. are stored.

To the graphical processing apparatus 54, a monitor 59 is connected. The graphical processing apparatus 54 displays images on a screen of the monitor 59 according to a command from the CPU 51. To the input interface 55, a keyboard 60 and a mouse 61 are connected. The input interface 55 transmits a signal transmitted from the keyboard 60 and the mouse 61 to the CPU 51 via the bus 58. The optical drive apparatus 56 reads in the application programs such as the OS program recorded on the optical disk 62 and a program for the movie showing management apparatus, and stores them on the hard disk drive 53.

The communication interface 57 is connected to the network 13. The communication interface 57 transmits and receives data to/from other computer such as the file server of the screen management system 11 via the network 13.

The hardware configuration described above can fulfill the processing functions according to the present embodiments.

### Description of Symbols

- 11: screen management system
- 12: movie theater management system
- 13: network
- 21: event content
- 22: preshow (ad) content
- 23: preview content
- 24: movie content
- 30: movie showing management apparatus
- 31: user management unit
- 31a: user information storing unit
- 32: content management unit
- 32a: content information storing unit
- 33: authority setting unit
- 34: authority management unit
- 35: owner group setting unit
- 36: affiliation group setting unit
- 37: content kind setting unit
- 38: content kind storing unit
- 39: content owner filter unit
- 40: content kind filter unit
- 41: content kind acquisition unit
- 42: content list generation unit
- 50: computer
- 51: CPU
- 52: RAM
- 53: hard disk drive
- 54: graphical processing apparatus
- 55: input interface
- 56: optical drive apparatus
- 57: communication interface
- 58: bus
- 59: monitor
- 60: keyboard
- 61: mouse
- 62: optical disk

## Claims

1. A movie showing management apparatus, comprising:
an owner group setting unit for setting a correspondence relationship between an area where contents are saved and a group holding the contents,
an affiliation group setting unit for setting a correspondence relationship between a user and an affiliation group of the user,
a content kind setting unit for setting a relationship between the user and a content kind browsable by the user,
a content owner filter unit for filtering the contents accessible by the user depending on the area holding the contents in accordance with the setting by the owner group setting unit and the affiliation group setting unit when the user accesses to the contents, and
a content kind filter unit for filtering the contents accessible by the user depending on the kind in accordance with the setting by the content kind setting unit when the user accesses to the contents.

2. The movie showing management apparatus according to claim 1, further comprising:
a content kind acquisition unit for acquiring information about the kind described in the content file.

3. The movie showing management apparatus according to claim 2, further comprising:
a content kind storing unit for holding the information about the kind acquired by the content kind acquisition unit, wherein
the content kind filter unit acquires the information about the kind from the content kind storing unit.

4. The movie showing management apparatus according to claim 1, wherein
the content owner filter unit allows the user to be accessed only the contents owned by the user affiliation group.

5. The movie showing management apparatus according to claim 1, wherein
the content owner filter unit allows the user to be accessed only the content kind browsable by the user.

6. A movie showing management method, comprising:
setting a first correspondence relationship between an area where contents are saved and a group holding the contents, a second correspondence relationship between a user and an affiliation group of the user, and a third correspondence relationship between the user and kinds of the contents accessible by the user, wherein the user is accessible to at least one of the contents held by the affiliation group of the user based on the first and second correspondence relationship and the content kind browsable by the user based on the third correspondence relationship when the user accesses to the contents.
